Europäisches Patentamt

European Patent Office

Office européen des brevets

(11) Veröffentlichungsnummer: **0 472 044 A2**

# EUROPÄISCHE PATENTANMELDUNG

(21) Anmeldenummer: **91113191.0**

(51) Int. Cl.⁵: **H04Q 7/04**, H04B 1/38

(22) Anmeldetag: **06.08.91**

(30) Priorität: **24.08.90 DE 4026817**

(43) Veröffentlichungstag der Anmeldung:
**26.02.92 Patentblatt 92/09**

(84) Benannte Vertragsstaaten:
**AT DE FR GB IT SE**

(71) Anmelder: **ROBERT BOSCH GmbH**
**Postfach 30 02 20**
**W-7000 Stuttgart 30(DE)**
Anmelder: **PEIKER ACUSTIC**
**Postfach 2055**
**W-6380 Bad Homburg v.d.H.(DE)**

(72) Erfinder: **Fritzke, Jörg-Detlev, Dipl.-Ing.**
**Wildganssteig 66 c**
**W-1000 Berlin 27(DE)**
Erfinder: **Lehmann, Harald**
**Mattenbader Pfad 28**
**W-1000 Berlin 27(DE)**
Erfinder: **Schone, Jürgen, Dipl.-Wirt.-Ing.**
**Lilienweg 71**
**W-6382 Friedrichsdorf(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**W-1000 Berlin 33(DE)**

(54) **Handbedienungsteil für Funktelefon mit Speicherung von Information während Abwesenheit.**

(57) 2.1 Bei Funkgeräten mit Handbedienteil gehen Informationen verloren, die während der Abwesenheit des Benutzers des Funkgerätes von dem Funkgerät empfangen werden.

2.2 Damit diese Informationen bei der Rückkehr des Benutzers zum Funkgerät (10) zur Wiedergabe bereitstehen, weist das Handbedienteil (13) eine Zusatzschaltung (15) mit einer elektronischen Speicherschaltung (21) und einer elektronischen Steuervorrichtung auf. Durch Betätigen eines zweiten Umschalters (S2) vor dem Verlassen des Funkgerätes wird die elektronische Speicherschaltung (21) in Bereitschaft geschaltet, so daß sie, wenn eine Information empfangen wird, diese in einem Speicher (28) speichert. Kehrt der Benutzer an das Funkgerät (10) zurück, dann kann er durch eine weitere Betätigung des zweiten Umschalters (S2) die gespeicherte Information abrufen und über den Lautsprecher (18) des Handbedienteils wiedergeben.

2.3 Ein bevorzugtes Anwendungsgebiet für das Handbedienteil sind in Kraftfahrzeuge eingebaute Funkgeräte.

3. Die Zeichnung zeigt ein vereinfachtes Blockschaltbild eines Funkgerätes und eines damit verbundenen Handbedienteils.

Die Erfindung geht von einem Handbedienteil nach dem Oberbegriff des Anspruchs 1 aus.

## Stand der Technik

Es sind ein Funkgerät und ein damit verbundenes Handbedienteil bekannt, bei dem Anrufe, die während der Abwesenheit des Funkteilnehmers eintreffen, verlorengehen. Sofern diese Informationen besonders wichtig sind, kann dadurch ein erheblicher Schaden verursacht werden. Es ist weiterhin bekannt, Sprachinformationen nach einer Analog/Digital-Wandlung in einem digitalen Speicher abzulegen, später abzurufen und nach einer Digital/Analog-Wandlung über einen Lautsprecher hörbar zu machen.

## Aufgabe

Der Erfindung liegt die Aufgabe zugrunde, ein mit einem Funkgerät verbundenes Handbedienteil gemäß dem Oberbegriff des Anspruchs 1 derart weiterzubilden, daß bei Abwesenheit des Funkteilnehmers vom Funkgerät eintreffende Informationen der Funkzentrale nicht verlorengehen. Die dafür benötigten Mittel sollen keinen Eingriff in das Funkgerät erfordern und den an das Funkgerät zurückkehrenden Funkteilnehmer in die Lage versetzen, die Informationen mit dem Handbedienteil abzurufen.

## Lösung

Diese Aufgabe wird bei einem mit einem Funkgerät verbundenen Handbedienteil durch die im kennzeichnenden Teil des Anspruchs 1 angegebenen Merkmale gelöst. Damit wird der Vorteil erzielt, daß an dem Funkgerät keine schaltungsmäßige oder konstruktive Änderung vorgenommen werden muß und daß lediglich im Handbedienteil eine Zusatzschaltung erforderlich ist. Ein bevorzugtes Anwendungsgebiet für das Handbedienteil sind in Kraftfahrzeuge eingebaute Funkgeräte.

## Beschreibung

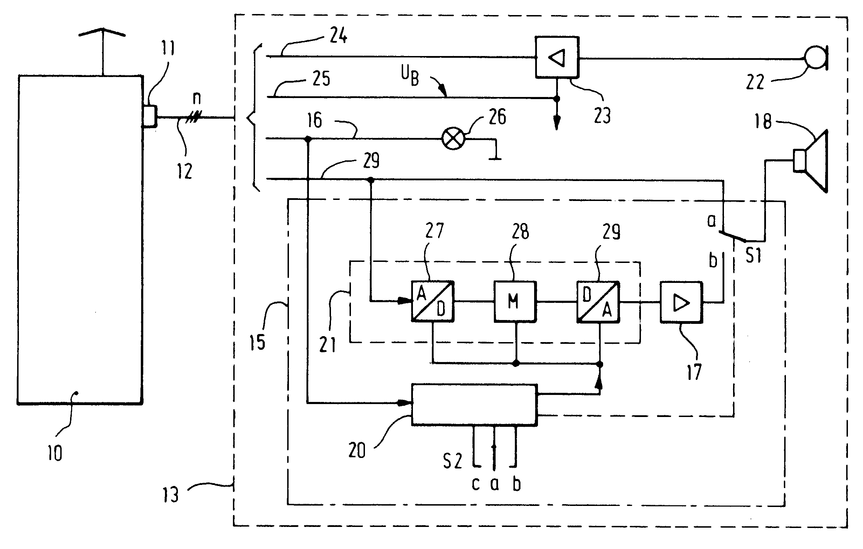

Ein Ausführungsbeispiel der Erfindung ist in der Zeichnung an Hand einer einzigen Figur dargestellt, die ein vereinfachtes Blockschaltbild des Funkgerätes und des Handbedienteils zeigt.

In der Zeichnung bezeichnet 10 ein Funkgerät, dessen Anschlußbuchse 11 über ein mehradriges Kabel 12 mit einem Handbedienteil 13 verbunden ist. Das Handbedienteil 13 hat einen üblichen Aufbau und ist durch eine Zusatzschaltung 15 ergänzt, die eingangsseitig mit einer Signalleitung 16 und ausgangsseitig mit einem Lautsprecher 18 des Handbedienteils verbunden ist. Die Zusatzschaltung 15 umfaßt eine elektronische Steuervorrichtung 20, eine elektronische Speicherschaltung 21, einen NF-Verstärker 17, einen ersten Umschalter S1 und einen zweiten Umschalter S2, der der elektronischen Steuervorrichtung zugeordnet ist.

Das Handbedienteil 13 enthält ein Mikrofon 22, das über einen Mikrofonverstärker 23 mit einer Mikrofonleitung 24 des Kabels 12 verbunden ist. Eine zu dem Kabel 12 gehörende Betriebsspannungsleitung 25 führt die Betriebsspannung $U_B$ zu dem Mikrofonverstärker 23 und weiteren elektronischen Baustufen des Handbedienteils 13. Die Steuerleitung 16 steht über ein optisches Anzeigeelement 26, das ist zum Beispiel eine Leuchtdiode, mit Masse in Verbindung.

Die elektronische Speicherschaltung 21 besteht aus einer Kettenschaltung eines A/D-Wandlers 27, eines Speichers 28, das ist zum Beispiel ein EEPROM, und eines D/A-Wandlers 29. Der zu der elektronischen Steuervorrichtung 20 gehörende zweite Umschalter S2 weist eine Ruhestellung a und zwei Schaltstellungen b und c auf. Der erste Umschalter S1 wird von der elektronischen Steuervorrichtung 20 betätigt; vgl. gestrichelte Linie zwischen der elektronischen Steuervorrichtung 20 und dem ersten Umschalter S1. Eine Sendetaste sowie gegebenenfalls weitere Bedientasten, wie zum Beispiel Ruftaste und Löschtaste, sind in der Figur der Übersichtlichkeit halber weggelassen worden.

Die Wirkungsweise der vorstehend beschriebenen Schaltung ist folgende.

Bevor der Funkteilnehmer sein Funkgerät 10 verläßt, schaltet er den zweiten Umschalter S2 in die Schaltstellung b, wodurch die mit ihrem Ausgang verbundene elektronische Speicherschaltung 21 in den Bereitschaftszustand geschaltet wird, in welchem sie vorbereitet ist, vom Funkgerät 10 empfangene Informationen zu speichern.

Sobald ein für das Funkgerät 10 bestimmtes Signal empfangen und ausgewertet worden ist, leuchtet das in der Signalleitung 16 liegende optische Anzeigeelement 26 auf. Gleichzeitig wird durch das Signal die elektronische Steuervorrichtung 20 angesteuert, die die Aufzeichnung der über die Leitung 29 des Kabels 12 herangeführten Informationen in den Speicher 21 veranlaßt. Der Speicher 28 hat eine vorgegebene Speicherkapazität, die für eine bestimmte Informationslänge ausreicht.

Nach Rückkehr des Funkteilnehmers zu dem Funkgerät 10 sieht dieser das optische Anzeigeelement 26 leuchten. Dadurch wird er darauf aufmerksam gemacht, daß eine Information gespeichert ist. Das Aufrufen der gespeicherten Information geschieht durch Umschalten des zweiten Umschalters S2 in die Schaltstellung c. Dadurch wird die elektronische Speicherschaltung 21 veranlaßt, die in dem Speicher 28 gespeicherte Information über den Digital/Analog-Wandler 29, den Verstärker 17 und den dann in die Schaltstellung b umgeschalteten ersten Umschalter S1 mit dem Lautsprecher 18 wiederzugeben. Ist die Information vollständig aus dem Speicher abgerufen worden, so kann die gespeicherte Information nochmals abgehört werden, indem der zweite Umschalter S2 noch einmal in die Schaltstellung a zurück und dann wieder in die Schaltstellung c überführt wird. Der Speicherinhalt des Speichers 28 kann zum Beispiel dadurch gelöscht werden, daß das Funkgerät 10 ausgeschaltet wird.

**Patentansprüche**

1. Mit einem Funkgerät über ein Kabel verbundenes Handbedienteil, das unter anderem ein Mikrofon und einen Lautsprecher aufweist, **dadurch gekennzeichnet,** daß das Handbedienteil (13) eine Zusatzschaltung (15) mit einer elektronischen Speicherschaltung (21) enthält, die über einen zu der Zusatzschaltung gehörenden ersten Umschalter (S1) in die Lautsprecherleitung (29) einschleifbar ist.

2. Handbedienteil nach Anspruch 1, dadurch gekennzeichnet, daß der elektronischen Speicherschaltung (21) eine elektronische Steuervorrichtung (20) zugeordnet ist, die die elektronische Speicherschaltung beim Empfang eines für das betreffende Funkgerät (10) bestimmten Signals in Bereitschaft schaltet und die beim anschließenden Empfang der Information das Einspeichern in die elektronische Speicherschaltung (21) steuert.

3. Handbedienteil nach Anspruch 1 oder 2, dadurch gekennzeichnet, daß die elektronische Speicherschaltung (21) eine Kettenschaltung aus einem A/D-Wandler (27), einem Speicher (28) und einem D/A-Wandler (29) umfaßt.

4. Handbedienteil nach einem der Ansprüche 1 bis 3, dadurch gekennzeichnet, daß die elektronische Speicherschaltung (21) eingangsseitig mit einer NF-Leitung (29) und ausgangsseitig über einen NF-Verstärker (17) und den ersten Umschalter (S1) mit dem Lautsprecher (18) verbunden ist.

5. Handbedienteil nach einem der Ansprüche 1 bis 4, dadurch gekennzeichnet, daß der elektronischen Steuervorrichtung (20) ein zweiter Umschalter (S2) mit drei Schaltstellungen zugeordnet ist, von denen eine erste Schaltstellung (a) die Ruhestellung ist, eine zweite Schaltstellung (b) der Betriebsbereitschaft für die elektronische Speicherschaltung (21) entspricht und eine dritte Schaltstellung (c) zum Abrufen der gespeicherten Information dient.

6. Handbedienteil nach einem der Ansprüche 1 bis 5, dadurch gekennzeichnet, daß in der Steuerleitung (16) ein optisches Anzeigeelement (26) angeordnet ist, das beim Empfang eines bestimmten Signals anspricht.